(19)

Europäisches Patentamt
European Patent Office
Office européen des brevets

(11)  **EP 3 534 184 B1**

(12)  **EUROPEAN PATENT SPECIFICATION**

(45) Date of publication and mention
of the grant of the patent:
**09.04.2025  Bulletin 2025/15**

(21) Application number: **17866251.6**

(22) Date of filing: **23.10.2017**

(51) International Patent Classification (IPC):
*G01T 1/164* (2006.01)      *G01T 1/29* (2006.01)
*G06T 11/00* (2006.01)

(52) Cooperative Patent Classification (CPC):
**G01T 1/2985; G06T 11/00**

(86) International application number:
**PCT/ES2017/070709**

(87) International publication number:
**WO 2018/078203 (03.05.2018 Gazette 2018/18)**

(54) **METHOD FOR GENERATING NUCLEAR IMAGES FOR NUCLEAR-IMAGING DEVICES WITH CONTINUOUS CRYSTAL DETECTORS**

VERFAHREN ZUR ERZEUGUNG VON NUKLEAREN BILDERN FÜR NUKLEARBILDGEBUNGSVORRICHTUNG MIT KONTINUIERLICHEN KRISTALLDETEKTOREN

PROCÉDÉ DE GÉNÉRATION D'IMAGES NUCLÉAIRES POUR DISPOSITIFS D'IMAGE NUCLÉAIRE AVEC DÉTECTEURS DE CRISTAL CONTINU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **25.10.2016  ES 201631371**

(43) Date of publication of application:
**04.09.2019  Bulletin 2019/36**

(73) Proprietors:
• **General Equipment for Medical Imaging, S.A.**
**46022 Valencia (ES)**
• **Universitat Politècnica de València**
**46022 Valencia (ES)**
• **Consejo Superior de Investigaciones Científicas (CSIC)**
**28006 Madrid (ES)**

(72) Inventors:
• **MOLINER MARTÍNEZ, Laura**
**46022 Valencia (ES)**
• **CORRECHER SALVADOR, Carlos**
**46022 Valencia (ES)**

• **BENLLOCH BAVIERA, José María**
**46022 Valencia (ES)**
• **GONZÁLEZ MARTÍNEZ, Antonio Javier**
**46022 Valencia (ES)**

(74) Representative: **Cueto, Sénida**
**SP3 Patents S.L.**
**Los Madroños, 23**
**28891 Velilla de San Antonio (ES)**

(56) References cited:
WO-A1-2012/172452      WO-A2-2008/142590
DE-A1- 102007 052 035      US-A1- 2011 204 245
US-A1- 2013 009 067

• VAZQUEZ C ET AL: "Parallelization of MLEM algorithm for PET reconstruction based on GPUs", 2014 IEEE NUCLEAR SCIENCE SYMPOSIUM AND MEDICAL IMAGING CONFERENCE (NSS/MIC), IEEE, 8 November 2014 (2014-11-08), pages 1 - 4, XP032879960, DOI: 10.1109/NSSMIC.2014.7430936

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

Nuclear Medicine obtains functional images from the distribution of a given radiopharmaceutical or radio-tracer injected into a patient. These radiopharmaceuticals contain in their molecular structure a radioactive isotope that is detected by the so-called gamma-cameras. The gamma-cameras are detectors of gamma radiation, existing two modalities of nuclear image based on them: PET equipment (*Positron Emission Tomography*) and SPECT equipment (*Single Photon Emission Computed Tomography*). SPECT systems detect gamma photons from the disintegration of the injected isotope, while PET equipment makes use of positron-emitting isotopes, detecting 511 keV gamma-ray energy pairs, traveling in opposite directions and in temporal coincidence from the electron-positron annihilation. The simultaneous detection (of the order of nanoseconds) of two gamma rays of these characteristics is termed coincidence. Therefore, a PET device must have at least two photon detectors facing each other for the acquisition of coincidences. However, the most common geometry used in PET is usually ring-shaped or polygonal in order to subtend a larger solid angle and to improve acquisition statistics.

The acquired data, this is, the gamma rays detected, provide the functional image sought after the process known as image reconstruction. This process is based on the processing of the events acquired by assigning them to the so-called Lines Of Response (LOR) or their generalization Tube Of Response(TOR), line (or volume around said line) defined by the trajectory of the two gamma rays detected from the annihilation of the positron in the case of PET, and, in the case of SPECT, line of the trajectory of the photon. When an event has been detected in a given LOR (or TOR) it is assumed that the emission of the radioisotope occurred along this line (or tube), but the exact point of the field of vision where it took place is unknown. The reconstruction process determines these emission positions, thus tracing the radiopharmaceutical distribution.

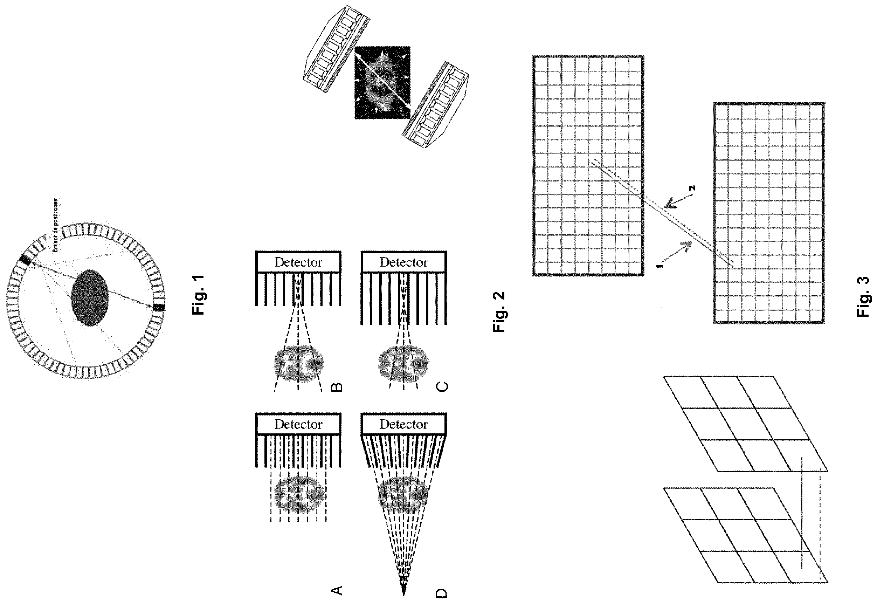

The lines of response (LORs or LORes) in the case of SPECT are straight lines drawn between the impact position of the gamma ray in the scintillator crystal and the pinhole (or central hole) of the collimator used in the detector. There are no collimators for PET, and the detector crystals are usually pixelated -JP5641930-B2, US4929835- in order to locate the registered coincidences. Alternatively, there are also PET detectors that use monolithic crystals -US9194959, EP2746816- that are virtually pixelated. In this way, the reconstruction algorithms treat in the same way detections in pixelated or monolithic crystal. In both types of crystal, the lines of response (or tubes) join the centers of the pixels, either real or virtual pixels, involved in the detection of coincidence (see figure 1).

In the case of systems with pixelated crystals, the number of existing LORes is fixed and dependent on the pairs defined in the electronics of the system (i.e. which opposing detectors are treated as coincidences), reaching the limit of $N^2$, being N the number of scintillation crystals. In the case of systems with monolithic crystals, the point of impact is calculated from a continuous signal, which is virtually pixelated to model the detector as a regular matrix of virtual pixels of the desired size. The virtual pixelation can be as small as the resolution of the detector, but in many cases high resolution pixelation is impractical for the computational capacity of current computers, both because of the memory required for its handling, and because of the reconstruction times, even using parallel implementations with GPUs (*Graphic Processor Units*).

There are some attempts to generate virtual pixels based on pixelated crystal systems, such as JP5641930-B2, to achieve a greater granularity in the detection of each detector pixel.

Current systems use millions of LORs to obtain images, maximum number is limited by the amount of data that can be processed, both in view of the memory used by the computational systems that perform the calculations, and in view of the reconstruction times applicable to commercial systems.

Therefore, an approach to the problem of the huge amount of data which is necessary to handle for obtaining the images is needed. For the case of continuous crystals, the present invention solves this problem.

The acquired data or LORs are stored in *list mode* format or sinograms. *List mode* is a temporarily ordered list of events acquired and their impact positions. In addition, they may contain other attributes such as the energy of the photons that have impacted, the moment of impact, etc. The sinogram is a histogram of the lines of response that indicates in which of these lines events were acquired. Therefore, these histograms provide the position and quantity of the acquired events. Each attribute of the detected events would need its own sinogram. For example, events that exceed a certain energy value could be stored in a sinogram, and those that have another energy, in another sinogram. Currently, the most frequent way of acquiring data from hardware to obtain images and their storage in the system (such as hard disk, memory, etc.) for later reconstruction is by *list mode* and the acquired data are histogrammed in sinograms in case the reconstruction algorithm requests it as *input*.

The functional image sought is a continuous function that is discretized in image elements to obtain the distribution of the radiopharmaceutical in the different points of the space. This image is obtained after the introduction of the acquired data (or LORs) in iterative statistical algorithms. These algorithms try to solve the system of equations g = A*f*, in which *f* constitutes the image sought, *A* is a linear operator that models the acquisition system and that represents the emission probabilities of each image element in the established LORs, and finally *g* constitutes the acquired data set. The calculation of probabilities of these operators is based on different techniques frequently related to distances, areas, intersection volumes or solid angles subtended between the image elements and the LORs. In these calculations, the concept of LOR to TOR (Tubes of Response) is usually generalized certain mathematical forms as Gaussian are assigned to them, in order to model the PSF (*Point Spread Function*) in the detector crystal, always considering the center of the detector pixel as the region of the greatest probability for the impact.

The reconstruction algorithms are based on projection and retro-projection operations of this linear operator, allowing to change from the so-called *data space* to the *image space* and vice versa. The *data space* is constituted by the number of coincidenes acquired in the respective pixels. The *image space* is constituted by the region of space, in which the object to be scanned is physically located. In order to obtain the values of the radiopharmaceutical distribution in each of the points of the image, this space is usually discretized in image elements, often in cubic voxels (three-dimensional pixels), although there are other types of bases such as spherical, blobs, etc...

Basically, the reconstruction algorithms start from an estimated initial image that they refine according to the acquired data. To do this, the initial estimated image is projected into the *data space* using the retro-projector. That is to say, from the modeling of our system the data are calculated that would have been obtained, if our image were the estimated one. These estimated data are compared with the measured ones, obtaining an error in the *data space.* This error will be retro-projected to the *image space* by the overhead projector and the estimated image will be updated. This process will be repeated until the estimated data converges with the measured ones. However, given that the acquired data are often incomplete and noisy, this process is usually stopped prematurely in order to avoid excessively noisy images. It is also frequent the application of filtering between iterations, such as the gaussian filter, to minimize the effects of noise in the image. The initial image to begin the reconstruction process is usually chosen soft, since it is considered that the difference of activity between contiguous voxels should not be very large. Reconstruction algorithms can also introduce certain knowledge of the a priori image, known as Bayesian methods. These methods assume that certain characteristics of the image are known, that will introduce in the algorithm in order to accelerate the convergence and to improve the final estimation of the image. As an example, these methods can consider that there are no abrupt changes in the distribution of the radiopharmaceutical throughout the field of vision and penalize those values in the image that represent them. In case of having a hybrid equipment, that means, that simultaneously provides functional and anatomical images, the latter can be used as priors. These priors could penalize abrupt changes between voxels of the same tissue, but allow them between different tissues.

The reconstruction algorithms need to predetermine the number of LORs in the system in order to calculate the so-called sensitivity. The sensitivity has a value for each voxel and is defined as a normalization factor that adds up the probabilities of emitting in all the voxels all the possible LORs of the system. Therefore, in order to apply this sensitivity, it is necessary to know a priori how many LORs exist in the system and which is the probability of emission of each LOR in each voxel. These probabilities are formed with the above-mentioned retro-projector, which allows us the transformation from one space to another through these probabilities. That is to say, the overhead projector tells us what probability a voxel has had to emit in a given LOR. Equation 1 shows the MLEM algorithm (*maximum likelihood expectation maximization*) (it is widely used and serves as a base of many others algorithms in PET reconstruction) showing the aforementioned sensitivity term. Both this algorithm and its accelerated version, OSEM (*ordered subsets expectation maximization*), which is currently the standard PET reconstruction algorithm, need as input a matrix that describes the probability of emission of the system and a histogram (sinogram) with the acquired data. In this way, to perform the projection and back projection operations, one needs to know exactly the number of LORs in the system, firstly, to be able to perform the data histogram and emission of the system and a histogram (sinogram) with the acquired data. In this way, to perform the projection and back projection operations, one needs to know exactly the number of LORs in the system, firstly, to be able to perform the data histogram and secondly, to define the matrix, since one will have one element per pair voxel-LOR. In each iteration, the algorithm needs to completely traverse the entire system matrix, as well as all acquired data. Equation 1 shows the term that models the sensitivity as the sum of the probabilities of all the voxel-LOR pairs, of the MLEM algorithm:

$$\hat{f}_j^{(n+1)} = \frac{\hat{f}_j^{(n)}}{\sum_{i=1}^{i=I} a_{ij}} \sum_{i=1}^{I} a_{ij} \frac{g_i}{\sum_{j\prime=1}^{J} a_{ij\prime} \hat{f}_{j\prime}^{(n)}}$$

Equation 1

Currently algorithms that reconstruct directly from the *List Mode* format instead of those that need sinograms as *input* are gaining popularity. This increase is due to the fact that, on the one hand, they do not need sonograms, which always imply a certain inaccuracy in the histogram, they can begin the reconstruction once a single event has been acquired and, on the other side, they also call the overhead projector once the coincidence acquired in their respective LOR has been identified, that is, they do not need a pre-calculated matrix of the system. In principle, this fact may seem counterproductive, but it is usually faster than having to read the entire system matrix and having to process all the data in each iteration. The conventional algorithms cited above, could also calculate these probabilities in real time, in fact, certain implementations with GPUs base their calculations on it, but for efficiency reasons, matrices are usually the most employed. However, algorithms based on *List Mode* files reading, also need to use the sensitivity named above and, therefore, for their calculations they will need a predetermined number of lines of response.

DE102007052035 disclosess a method for positron emission tomography and a PET scanner. The positron emission tomography method employs the following steps: a) two photons are emitted in opposite directions by an annihilation event in the sample, b) at least two of a plurality of detectors arranged around the sample are prompted to output a signal by the two photons, c) a signal line on which the event may have taken place is determined from the location of the detectors which have output a signal, d) this signal line is evaluated in the tomographic reconstruction of the sample, wherein for each event a plurality of signal lines are determined and evaluated in the tomographic reconstruction of the sample. Up to now it has been considered that the lines of response come from the pixel detector center, but pixels were "fixed" in a grid, whereas, according to the present invention, although this same consideration is also made, pixels do not have a fixed position, but they "self-center" at the point of impact. To consider that the lines of response come from the center of the detector pixel constitutes an approximation, since not all the photons will impact at the center of it. By taking this hypothesis a certain error is made in the description of the photons trajectory, a fact that will affect the reconstructed image. Correcting this error is the problem that solves the present invention, in such a way that it becomes the minimum possible error.

In particular, in a continuous crystal, a photon can hit anywhere, so the impact positions are infinite. So when a photon hits, according to the method of the present invention, the pixel is plotted in that position. In addition, a second photon can hit a very close position and therefore, for that second impact, another pixel is generated, so that both pixels can even partially overlap each other. The lines of response or LORES are defined by the user in the process of detecting photons. There is an infinite number of potential impact positions, so there will be infinite number of potential LORES; but in a real acquisition, the number of impact positions is finite, and therefore, also the number of lines of response.

The method of the present invention allows to know the impact position of the photons in the detectors, which leads to being able to accurately know the emission points of the radiopharmaceutical and thus improve the accuracy of the final image, which is a crucial aspect in nuclear medicine. By identifying the actual impact centers with the maximum probability of emission line, the modeling of the system is much more precise and the resulting image quality (resolution) is greater. The description of the trajectory, i.e. the probabilities that at each point of the trajectory the emission has occurred, it is usually modeled in such a way that the probability of emission is maximum in the line that joins the centers of the detectors and decreases exponentially (Gaussian distribution) as it moves away from said central line. Therefore, the location of said line in space will determine the accuracy of the emission probabilities in the system.

Unlike what happens in the state of the art, where the LORs are predefined, in the method of the present invention the LOR is determined each time and are not predefined.

The method of the present invention constructs pixels as the photons impact with the crystal so, unlike the state of the art, it does not take into account a network of virtual pixels as such.

## BRIEF DESCRIPTION OF THE FIGURES

Figure 1 shows the line of response between the centers of two detector pixels for a positron emitter point.

Figure 2 shows Lines of Response in SPECT (left) and PET (right), taken from article J. Nucl. Med. February 1, 2003 vol. 44 no. 2, 291-315 and AJNR American Journal of Neuroradiology 29: 1247-56 Aug. 2008 www.ajnr.org, "Brain Single-Photon Emission CT Physics Principles"; R. Accorsi.

Figure 3 shows the trajectory of the rays in pixelated or continuous crystals. Real trajectory is shown in continuous line. In dashed line the trajectory considered for both pixelated crystals detectors, and continuous crystals detectors (with fixed virtual pixelation).

Figure 4 shows a virtual pixel created on the detection position (left) with the possibility of overlapping pixels and their positioning anywhere in the detector independently of any fixed virtual matrix (right). In a fixed virtual pixel system - as in the state of the art - , as a matrix, two very close impacts would result in the same virtual pixel. When calculating them centered in the impact in an independent way - as it happens in the present invention -, two very close impacts will give two different pixels, but with a large common area (overlapping area).

Figure 5 shows an example of a virtual pixel with different shapes and its LORes. The obtaining of a virtual pixel is carried out virtually, while the photons impact on the photodetectors, i.e. mathematically, using the center as measured by the nuclear imaging device, and which gives us the continuous crystal system, and we calculate the position of the vertices of the pixel - or area of the pixel - (with several methods as proposed below).

Figure 6 shows the image of a point source reconstructed with the method of the invention.

Figure 7 shows a graph showing the improvement in spatial resolution achieved by the method of the invention.

Figure Legends:

1. Real trajectory of photons
2. Detection considered

DEFINITIONS

"Event": an event is an emission of a gamma photon..
"Impact point" and "impact position" are used interchangeably and refer to the center of the virtual pixel that is going to be generated.
LOR: Line Of Response
TOR: Tube Of Response, a TOR is the volume (that for example could be a parallelepiped between two square pixels) around a LOR and along it, and that joins the centers of two virtual pixels, that is, the two points of impact on two detectors. For simplicity, in this application when the term LOR is cited, reference is made to both a LOR and the generalization of an LOR, that is, to a TOR.

DESCRIPTION OF THE INVENTION

The method of the present invention uses the information of event detection provided by a nuclear image acquisition system based on monolithic crystals, where the calculation of the impact position is performed as accurately as possible.

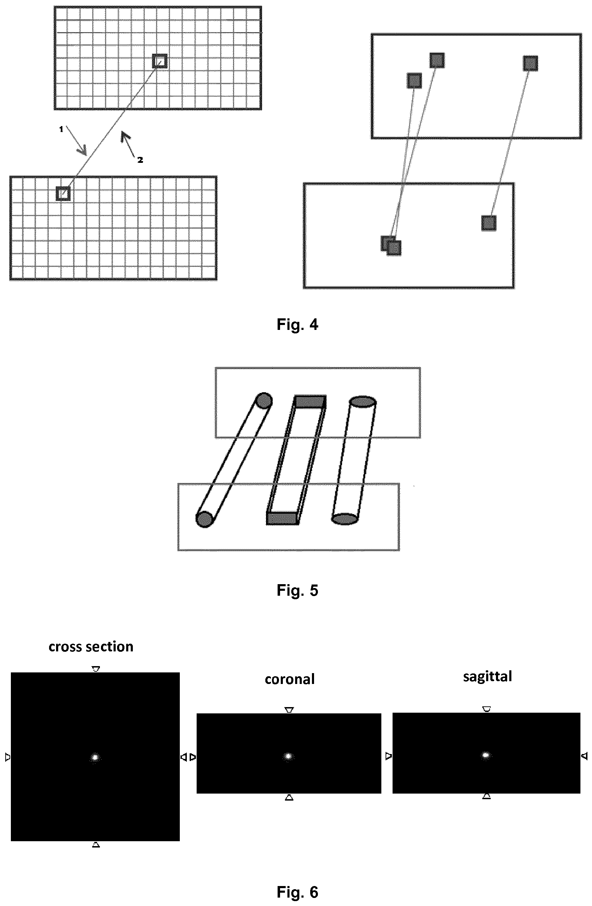

The method proposed by the present invention constructs the pixels as the photons impact with the monolithic crystal - this is applicable both in PET and SPECT - as explained below, so it does not take into account a network of virtual pixels as such (see Figure 4). In this way, the pixels can overlap each other and it is possible to increase the accuracy in the path followed by the annihilation photons (or emission in the case of SPECT), minimizing the impact of positioning error due to virtual pixelation in a regular matrix.

The present invention refers to a method of generating nuclear images for a nuclear imaging device with continuous according to claim 1 and a device according to claim 12.

According to the state of the art, pixels are fixed and predefined, and each impact is assigned to one pixel (arranged in a regular matrix), that is, for each impact it is decided which pixel to use, while according to the method of the invention they are calculated from the impact position and they are different each time.

In the case that the nuclear imaging device is a PET, by the physical principle, 2 gamma photons are emitted simultaneously. Therefore, 2 positions are detected and two pixels are created that, when joined together, will give rise to the LOR.

In the case of SPECT, only one photon is emitted. A pixel is detected and created, and the LOR is generated with that pixel and the hole -pinhole- of the collimator.

The generation of a virtual pixel according to the method of the invention comprises:

- determining the point of impact of each photon in the corresponding detector, using said point of impact as the center of the virtual pixel to be generated, and
- determining the area of said virtual pixel, calculating the vertices for each impact, independently on any other pixel previously generated.

Said pixel area is not predetermined as in the methods of the state of the art, but according to the method of the invention it can be changed depending on the position and/or other parameters.

In addition, after obtaining the area of the pixels, the method of the invention comprises:

- calculating the trajectory of the LOR - or its generalization to TOR - from two virtual pixels previously generated in the case of a PET device, or from the LOR corresponding to the single impact, in the case of a SPECT device,
- obtaining the emission probabilities associated to said line of response, that is, at that moment, calculating the trajectory of the line by the field of view,
- generating images using said lines of response using algorithms based on *list mode*.

The calculation of the emission probabilities associated to said LOR is carried out online, and the emission probabilities are calculated using the mentioned *list mode* algorithms line by line.

The probabilities of each LOR are finite, there is one for each voxel that it crosses. However, if potential LORs are infinite - since their center is a position continuously determined in the crystal-, but in the real acquisitions there is a determined number, therefore, for the method of the present invention there is a finite number of LORES that always have a finite number of probabilities.

What is provided herein is that this calculation is more precise because the LORES are determined each time and are not predefined.

The trajectory of the LOR formed between both pixels is calculated as the intersection of the volume formed between the pixels in the case of a PET device, as ends of a three-dimensional polyhedron, and the field of view, formed by voxels, or between the pixel and the pinhole of the collimator in the case of SPECT and the field of vision formed by voxels, which can be selected between orthogonal, blobs, spherical or any other geometry.

According to the method of the invention, for each voxel that intersects with the volume formed between pixels, the probability of estimated emission of the LOR is calculated by means of a procedure comprising one of the following options:

- ○ Using the intersection volume value,
- ○ Using the value of the solid angle of said voxel, or part of the voxel that subtends the virtual pixels,
- ○ Using the orthogonal distance from the center of the voxel to the central line of the LOR,
- ○ Using the distance that the LOR crosses in the voxel,
- ○ Using a mathematical function that allows to estimate said probability numerically,
- ○ Using a combination of the above procedures.

According to the invention, the virtual pixels generated can partially overlap. In addition, they may have different sizes in the detector itself or in an opposite detector, depending on the value of one or more parameters. One of these parameters, on which the size depends, can be the position detected in the detector. The size may be different in each detector, for example, making TORs similar to prisms.

According to the invention, virtual pixels can be polygonal in shape, such as rectangles, circles or ellipses.

In more detail, the construction process of said pixels consists of the following steps:

- Determining the point of impact, which will be the center of the virtual pixel, in the detector using continuous crystal with high precision, using the center of gravity (or mass) of the distribution of the light recorded in the crystal, obtaining , or calculating, the center of gravity (or mass) based on the information provided by the detectors using mathematical methods (such as the *anger* logic or using orthogonal projections as rows and columns), adjustments of functions such as "*inverse square law*" or Gaussian, "*rise to the power*", or any other function that allows to calculate said center), although there are other methods such as neural networks or complex iterative algorithms (such as MLEM) that allow to determine with precision the point of impact,

- Determining the area of said virtual pixel, independently on any other previously generated pixel:

  - ○ Said area may be rectangular, cylindrical or any other polygonal shape of any size smaller than the size of the crystal. Therefore, it can be defined by a mathematical function or by a list of vertices together with the central point.
  - ○ This area can simulate any mathematical function, such as the response of an impact on the crystal, being, for example, the basis of a Gaussian distribution.

- Once the virtual areas of the pixels corresponding to the impacts of the annihilation (or the unique impact for SPECT) are determined, the trajectory of the LOR formed between both pixels is calculated, that is, the voxels of the field of vision, that are crossed by the LOR, are determined.. Usually the trajectory is calculated as the intersection of the volume formed between the pixels (as ends of a three-dimensional polyhedron), or between a pixel and the collimator hole in the case of SPECT, and the field of vision, formed by voxels.

o Voxels can be orthogonal, blobs, spherical or any other base.

The intersection can be calculated as an intersection of volumes, the solid angle covered by each voxel (or its intersected volume), the orthogonal distance of the voxel to the center of the line of response, etc. or using only the line determined between the centers of the virtual pixels or any other method that determines the voxels that said LOR goes through.

- For each voxel that intersects with the volume, the estimated emission probability of the LOR is calculated by a procedure that includes one of the following options:

  ∘ Using the value of the intersected volume
  ∘ Using the value of the solid angle of said voxel, or part of the voxel that subtends the virtual pixels
  Using the orthogonal distance from the center of the voxel to the center line of the LOR
  ∘ Using the distance that the LOR crosses in the voxel
  Using any mathematical function that allows to estimate numerically said probability

Using any combination of said methods named above (for example, the solid angle of the voxel volume intersecting with the LOR).

The pixels may have different sizes in the detector itself or in an opposite detector, depending on the value of one or more parameters. That is, the method of the invention, since it determines the area for each pixel corresponding to an impact, allows the size of said area of the pixel to be different depending on the position calculated in the detector (or of any other parameter, such as for example, the depth of the impact on the crystal), for example, to model the PSF (*Point Spread Function* or detector response function)).

According to the method of the invention, the vertices of each pixel are calculated for each impact, without taking into account any calculation for previous impacts: for example, the vertices could be 1 mm from the center of the pixel for impacts in the center of the module, and 2 mm (larger pixels) when the impact is near the edge of the module. Also, the method of the present invention allows the overlap between different pixels, increasing the granularity of the detection of the LORes. This overlap is impossible to be achieved with fixed virtual pixel networks. The advantage of the present invention is that it models the detector more realistically since two impacts that fall very close, with other methods of the prior art would be determined as the same LOR, but with this one, each impact is a different LOR with different areas (although they overlap to a large extent).

The probabilities described above, which are calculated at the intersection of the trajectory of the LOR, will be somewhat different for two very close impacts because the intersection volumes will not be the same, due to the little separation the virtual pixels have.

Since the position of the impact is used as the center for the determination of the pixels, with the present invention a minimization of the positioning error of the LOR is obtained, which allows to obtain a higher resolution in the images, as well as a minimization of the background noise, since the voxels that will be calculated in the trajectory of the LOR as possible emitters of the radiotracer, will be determined in a more precise way.

The main advantage of the present invention is that the lines of response -LORs- can be established directly where the photons have impacted, instead of being predefined LORs as in the state of the art. This advantage results in an improvement in the quality and accuracy of the reconstructed image.

Once the virtual pixels have been built in the detectors involved in the event detected by the continuous crystal nuclear imaging device, the probabilities associated to the Line of response (or its extension to Tube of response (TOR)), necessary for the reconstruction process, as indicated above. Two pixels are obtained for PET because two impacts are detected for each positron annihilation, while one is obtained only for SPECT and the "other" would be the pinhole of the collimator in that case (which is an always fixed area).

The calculation of the emission probabilities associated with said LOR is necessary to be carried it out on-line, since a priori there may be an infinite number of LORs and therefore their probabilities cannot be pre-calculated and stored for later use.

In order to generate images you need to use the algorithm based on the *list mode* format, whose design is very favorable to the calculation of the probability of emission of the voxels for each LOR that is detected in the system. The method calculates, using the mentioned *list mode* algorithms, emission probabilities line by line.

The *list mode* algorithms need, to generate the images, the calculation of the sum of the probabilities associated to all the LORs of the system. This sum, called system sensitivity, will be calculated with a regular matrix of pixels in high resolution (virtual pixels as small as possible) and will be used for any combination of pixel sizes that one wants to use in the algorithm, being this a valid approximation for the correct generation of three-dimensional images.

The *list mode* algorithms for the generation of images are standard in the industry. They are responsible for generating an image starting from a group of LORes, it is a well-known aspect and has been explained previously.

## Example

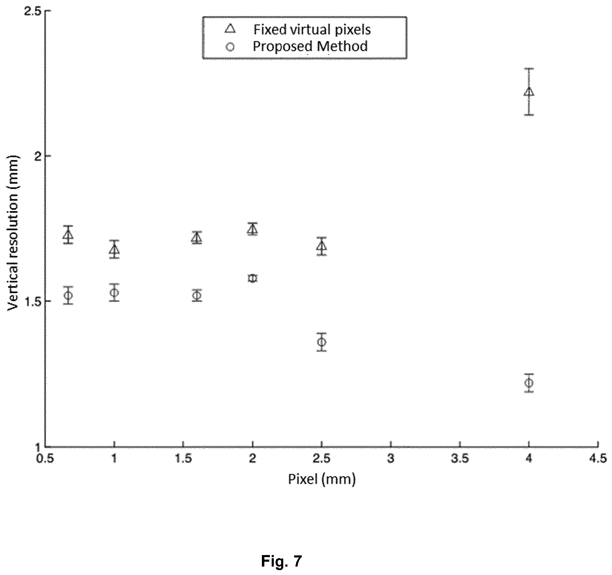

Figures 6 and 7 in which the image of a point source reconstructed with the method of the invention is shown and a graph showing the improvement in spatial resolution (measured as the width of a point source reconstructed in several positions) that is achieved with the method of the invention are an example of the use and advantages thereof.
In figure 7 the pixels of the upper part of the graph are fixed virtual pixels (triangular legend), whereas the lower ones are the virtual pixels obtained with the method of the invention (circular legend).

## Claims

1. Method for generating nuclear images for a nuclear imaging device with continuous crystal detectors by means of

   - detecting the interaction of gamma photons from a radioactive source with a continuous crystal, thereby obtaining the impact position of each photon in the corresponding continuous crystal detector

   **characterized in that** it comprises:

   - generating, for each photon detected, after obtaining the impact position, a virtual pixel in the corresponding continuous crystal detector of the nuclear imaging device around each measured impact position
   - assigning for each photon detected, the corresponding virtual pixel to a Line Of Response, LOR, or its extension, a Tube of Response, TOR, and
   - obtaining a nuclear image from the lines of response of all photons detected, or its extension, a Tube of Response.

2. Method for generating nuclear images according to claim 1, wherein the generation of the virtual pixel comprises

   - using said impact position as the center of the virtual pixel to be generated, and
   - determining the area of said virtual pixel, calculating the vertices for each impact, independently on any other previously generated virtual pixel.

3. Method for generating nuclear images according to claim 1 or 2, **characterized in that** it also comprises:

   - calculating the LOR trajectory - or its generalization to TOR,

      - from two virtual pixels previously generated for PET,
      - or from a corresponding LOR to a unique impact in the case of SPECT,

   - obtaining the emission probabilities associated to said line of response, calculating the trajectory of the line of response by the field of view,
   - generating images using said lines of response and algorithms based on *list mode.*

4. Method of generating nuclear images according to claim 3, wherein the LOR trajectory

   - is calculated as the intersection of the volume formed between the two virtual pixels in the case of a PET device, as ends of a three-dimensional polyhedron and the vision field formed by voxels,
   - or is calculated as the intersection of the volume formed between a pixel and the pinhole of the collimator in the case of SPECT and the vision field formed by voxels.

5. Method of generating nuclear images according to claim 4, wherein the voxels are selected from orthogonal, blobs and spherical.

6. Method for generating nuclear images according to claim 4 or 5, wherein for each voxel that intersects with the volume defined in claim 4, the estimated emission probability of the LOR is calculated by a procedure selected from:

- using the value of the intersected volume
- using the value of the solid angle of said voxel, or part of the voxel that subtends the virtual pixels
- using the orthogonal distance from the center of the voxel to the central line of the LOR
- using the distance that the LOR crosses in the voxel
- using a mathematical function that allow to estimate this probability numerically
- using a combination of the previous procedures.

7. Method for generating nuclear images according to one of claims 1 to 4, in which the generated virtual pixels partially overlap.

8. Method for generating nuclear images according to anyone of claims 1 to 4, or 7, wherein the pixels have different sizes in the detector itself in the case that the device is a SPECT, or in an opposite detector in the case that the device is a PET depending on the value of one or more parameters.

9. Method for generating nuclear images according to anyone of claims 1 to 4, or 7 to 8, wherein the pixels change in size depending on the impact position detected in the detector.

10. Method for generating nuclear images according to anyone of claims 1 to 4, or 7 to 9, wherein the virtual pixels have a polygonal shape.

11. Method for generating nuclear images according to anyone of claims 1 to 4, or 7 to 10, wherein the virtual pixels have shapes selected between rectangles, circles or ellipses.

12. Device for generating nuclear images with continuous crystal detectors **characterized in that** it comprises a data processor capable of

 - generating, for each photon detected in a continuous crystal detector, after obtaining the impact position, a virtual pixel in the corresponding continuous crystal detector of the nuclear imaging device around each measured impact position
 - assigning for each photon detected, the corresponding virtual pixel to a Line Of Response, LOR, or its extension, a Tube of Response, TOR, and
 - obtaining a nuclear image from the lines of response of all photons detected, or its extension, a Tube of Response,

13. Device according to claim 12, wherein the data processor calculates the impact position in the continuous crystal detector in a continued manner.

14. Device according to claim 12 or 13, selected between PET and SPECT.

**Patentansprüche**

1. Verfahren zur Erzeugung nuklearer Bilder für eine nukleare Bildgebungsvorrichtung mit Detektoren aus kontinuierlichen Kristallen mittels

 - Detektieren der Wechselwirkung von Gammaphotonen aus einer radioaktiven Quelle mit einem kontinuierlichen Kristall, wodurch die Auftreffposition jedes Photons in dem entsprechenden Detektor aus kontinuierlichen Kristallen erhalten wird,

 **dadurch gekennzeichnet, dass** es Folgendes umfasst:

 - Erzeugen eines virtuellen Pixels in dem entsprechenden Detektor aus kontinuierlichen Kristallen der nuklearen Bildgebungsvorrichtung um jede gemessene Auftreffposition herum für jedes detektierte Photon nach Erhalten der Auftreffposition
 - Zuweisen des entsprechenden virtuellen Pixels für jedes detektierte Photon zu einer Line of Response LOR oder deren Verlängerung, einer Tube of Response TOR, und
 - Erhalten eines nuklearen Bildes aus den Lines of Response aller detektierten Photonen oder deren Erweiterung, einer Tube of Response.

**2.** Verfahren zur Erzeugung nuklearer Bilder nach Anspruch 1, wobei die Erzeugung des virtuellen Pixels Folgendes umfasst:

- Verwenden der Auftreffposition als Zentrum des zu erzeugenden virtuellen Pixels und
- Bestimmen der Fläche des virtuellen Pixels, Berechnen der Scheitelpunkte für jedes Auftreffen, unabhängig von jedem anderen zuvor erzeugten virtuellen Pixel.

**3.** Verfahren zur Erzeugung nuklearer Bilder nach Anspruch 1 oder 2, **dadurch gekennzeichnet, dass** es außerdem Folgendes umfasst:

- Berechnen der LOR-Flugbahn oder ihrer Generalisierung zu TOR

- aus zwei zuvor erzeugten virtuellen Pixeln bei PET
- oder aus einer entsprechenden LOR zu einem einmaligen Auftreffen im Falle von SPECT,

- Erhalten der Emissionswahrscheinlichkeiten in Verbindung mit der Line of Response, Berechnen der Flugbahn der Line of Response durch das Sichtfeld,
- Erzeugen von Bildern unter Verwendung der Lines of Response und Algorithmen auf der Grundlage des *List-Mode.*

**4.** Verfahren zur Erzeugung nuklearer Bilder nach Anspruch 3, wobei die LOR-Flugbahn

- als Schnittpunkt des zwischen den zwei virtuellen Pixeln im Falle eines PET-Geräts als Enden eines dreidimensionalen Polyeders gebildeten Volumens und dem aus Voxeln gebildeten Sichtfeld berechnet wird
- oder als Schnittpunkt des zwischen einem Pixel und dem Pinhole des Kollimators im Falle von SPECT gebildeten Volumens und dem durch Voxel gebildeten Sichtfeld berechnet wird.

**5.** Verfahren zur Erzeugung nuklearer Bilder nach Anspruch 4, wobei die Voxel aus orthogonal, Tropfen und kugelförmig ausgewählt sind.

**6.** Verfahren zur Erzeugung nuklearer Bilder nach Anspruch 4 oder 5, wobei für jedes Voxel, das das in Anspruch 4 definierte Volumen schneidet, die geschätzte Emissionswahrscheinlichkeit der LOR anhand eines Verfahrens berechnet wird, das aus folgenden ausgewählt ist:

∘ Verwenden des Werts des geschnittenen Volumens
∘ Verwenden des Werts des Raumwinkels des Voxels oder des Teils des Voxels, der die virtuellen Pixel schneidet
∘ Verwenden des orthogonalen Abstands vom Zentrum des Voxels bis zur Mittellinie der LOR
∘ Verwenden des Abstands, den die LOR in dem Voxel kreuzt
∘ Verwenden einer mathematischen Funktion, die eine numerische Schätzung dieser Wahrscheinlichkeit ermöglicht,
∘ Verwenden einer Kombination der vorherigen Verfahren.

**7.** Verfahren zur Erzeugung nuklearer Bilder nach einem der Ansprüche 1 bis 4, bei dem sich die erzeugten virtuellen Pixel teilweise überlappen.

**8.** Verfahren zur Erzeugung nuklearer Bilder nach einem der Ansprüche 1 bis 4 oder 7, wobei die Pixel in dem Fall, dass die Vorrichtung ein SPECT ist, in dem Detektor selbst oder in dem Fall, dass die Vorrichtung ein PET ist, in einem gegenüberliegenden Detektor je nach dem Wert eines oder mehrerer Parameter unterschiedliche Größen aufweisen.

**9.** Verfahren zur Erzeugung nuklearer Bilder nach einem der Ansprüche 1 bis 4 oder 7 bis 8, bei dem die Pixel je nach der in dem Detektor detektierten Auftreffposition ihre Größe ändern.

**10.** Verfahren zur Erzeugung nuklearer Bilder nach einem der Ansprüche 1 bis 4 oder 7 bis 9, wobei die virtuellen Pixel eine polygonale Form aufweisen.

**11.** Verfahren zur Erzeugung nuklearer Bilder nach einem der Ansprüche 1 bis 4 oder 7 bis 10, wobei die virtuellen Pixel Formen aufweisen, die aus Rechtecken, Kreisen oder Ellipsen ausgewählt sind.

**12.** Vorrichtung zur Erzeugung nuklearer Bilder mit Detektoren aus kontinuierlichen Kristallen, **dadurch gekennzeichnet, dass** sie einen Datenprozessor umfasst, der zu Folgendem in der Lage ist:

- Erzeugen eines virtuellen Pixels in dem entsprechenden Detektor aus kontinuierlichen Kristallen der nuklearen Bildgebungsvorrichtung um jede gemessene Auftreffposition herum für jedes in einem Detektor aus kontinuierlichen Kristallen detektierten Photons nach Erhalten der Auftreffposition
- Zuweisen des entsprechenden virtuellen Pixels für jedes detektierte Photon zu einer Line of Response LOR oder deren Verlängerung, einer Tube of Response TOR, und
- Erhalten eines nuklearen Bildes aus den Lines of Response aller detektierten Photonen oder deren Erweiterung, einer Tube of Response.

**13.** Vorrichtung nach Anspruch 12, wobei der Datenprozessor die Auftreffposition in dem Detektor aus kontinuierlichen Kristallen fortlaufend berechnet.

**14.** Vorrichtung nach Anspruch 12 oder 13, ausgewählt aus PET und SPECT.


**Revendications**

**1.** Procédé de génération d'images nucléaires pour un dispositif d'imagerie nucléaire avec des détecteurs à cristal continu au moyen de

- la détection de l'interaction de photons gamma à partir d'une source radioactive avec un cristal continu, obtenant de ce fait la position d'impact de chaque photon dans le détecteur à cristal continu correspondant

**caractérisé en ce qu'**il comprend :

- la génération, pour chaque photon détecté, après l'obtention de la position d'impact, d'un pixel virtuel dans le détecteur à cristal continu correspondant du dispositif d'imagerie nucléaire autour de chaque position d'impact mesurée
- l'attribution pour chaque photon détecté, du pixel virtuel correspondant à une ligne de réponse, LOR, ou son extension, un tube de réponse, TOR, et
- l'obtention d'une image nucléaire à partir des lignes de réponse de tous les photons détectés, ou de son extension, un tube de réponse.

**2.** Procédé de génération d'images nucléaires selon la revendication 1, dans lequel la génération du pixel virtuel comprend

- l'utilisation de ladite position d'impact comme centre du pixel virtuel à générer, et
- la détermination de la surface dudit pixel virtuel, le calcul des sommets pour chaque impact, indépendamment d'un quelconque autre pixel virtuel généré précédemment.

**3.** Procédé de génération d'images nucléaires selon la revendication 1 ou 2, **caractérisé en ce qu'**il comprend également :

- le calcul de la trajectoire LOR - ou sa généralisation TOR,

- à partir de deux pixels virtuels générés précédemment pour le PET,
- ou à partir d'une LOR correspondant à un impact unique dans le cas de SPECT,

- l'obtention des probabilités d'émission associées à ladite ligne de réponse, calculant la trajectoire de la ligne de réponse par le champ de vision,
- la génération d'images à l'aide desdites lignes de réponse et des algorithmes basés sur le *mode liste.*

**4.** Procédé de génération d'images nucléaires selon la revendication 3, dans lequel la trajectoire LOR

- est calculée comme l'intersection du volume formé entre les deux pixels virtuels dans le cas d'un dispositif PET, comme extrémités d'un polyèdre tridimensionnel et le champ de vision formé par des voxels,

- ou est calculé comme l'intersection du volume formé entre un pixel et le trou du collimateur dans le cas de SPECT et le champ de vision formé par des voxels.

5. Procédé de génération d'images nucléaires selon la revendication 4, dans lequel les voxels sont choisis parmi les voxels orthogonaux, les blobs et les voxels sphériques.

6. Procédé de génération d'images nucléaires selon la revendication 4 ou 5, dans lequel pour chaque voxel qui intersecte avec le volume défini dans la revendication 4, la probabilité d'émission estimée de la LOR est calculée par une procédure choisie parmi :

○ l'utilisation de la valeur du volume intersecté
○ l'utilisation de la valeur de l'angle solide dudit voxel, ou d'une partie du voxel qui sous-tend les pixels virtuels
○ l'utilisation de la distance orthogonale du centre du voxel jusqu'à la ligne centrale de la LOR
○ l'utilisation de la distance que la LOR traverse dans le voxel
○ l'utilisation d'une fonction mathématique qui permet d'estimer numériquement cette probabilité
○ l'utilisation d'une combinaison des procédures précédentes.

7. Procédé de génération d'images nucléaires selon l'une des revendications 1 à 4, dans lequel les pixels virtuels générés se chevauchent partiellement.

8. Procédé de génération d'images nucléaires selon l'une quelconque des revendications 1 à 4 ou 7, dans lequel les pixels ont des tailles différentes dans le détecteur lui-même dans le cas où le dispositif est un SPECT, ou dans un détecteur opposé dans le cas où le dispositif est un PET, en fonction de la valeur d'un ou de plusieurs paramètres.

9. Procédé de génération d'images nucléaires selon l'une quelconque des revendications 1 à 4, ou 7 à 8, dans lequel les pixels changent de taille en fonction de la position d'impact détectée dans le détecteur.

10. Procédé de génération d'images nucléaires selon l'une quelconque des revendications 1 à 4, ou 7 à 9, dans lequel les pixels virtuels ont une forme polygonale.

11. Procédé de génération d'images nucléaires selon l'une quelconque des revendications 1 à 4, ou 7 à 10, dans lequel les pixels virtuels ont des formes choisies entre des rectangles, des cercles ou des ellipses.

12. Dispositif de génération d'images nucléaires avec des détecteurs à cristal continu **caractérisé en ce qu'**il comprend un processeur de données capable de

- la génération, pour chaque photon détecté dans un détecteur à cristal continu, après l'obtention de la position d'impact, d'un pixel virtuel dans le détecteur à cristal continu correspondant du dispositif d'imagerie nucléaire autour de chaque position d'impact mesurée
- l'attribution pour chaque photon détecté, du pixel virtuel correspondant à une ligne de réponse, LOR, ou son extension, un tube de réponse, TOR, et
- l'obtention d'une image nucléaire à partir des lignes de réponse de tous les photons détectés, ou de son extension, un tube de réponse.

13. Dispositif selon la revendication 12, dans lequel le processeur de données calcule de manière continue la position d'impact dans le détecteur à cristal continu.

14. Dispositif selon la revendication 12 ou 13, choisi entre un PET et un SPECT.

Fig. 1

Fig. 2

Fig. 3

**Fig. 4**

**Fig. 5**

**Fig. 6**

**Fig. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5641930 B
- US 4929835 A
- US 9194959 B
- EP 2746816 A
- DE 102007052035

**Non-patent literature cited in the description**

- *J. Nucl. Med.*, 01 February 2003, vol. 44 (2), 291-315
- **R. ACCORSI**. Brain Single-Photon Emission CT Physics Principles. *AJNR American Journal of Neuroradiology*, August 2008, vol. 29, 1247-56